(19) Europäisches Patentamt
European Patent Office
Office européen des brevets

(11) **EP 4 269 359 A1**

(12) **EUROPEAN PATENT APPLICATION**
published in accordance with Art. 153(4) EPC

(43) Date of publication:
**01.11.2023 Bulletin 2023/44**

(21) Application number: **21910842.0**

(22) Date of filing: **22.12.2021**

(51) International Patent Classification (IPC):
*C01G 45/00* (2006.01)      *C01B 25/30* (2006.01)
*H01M 4/36* (2006.01)      *H01M 4/505* (2010.01)

(52) Cooperative Patent Classification (CPC):
**C01B 25/30; C01G 45/00; C01G 45/12; H01M 4/36;**
**H01M 4/505;** Y02E 60/10

(86) International application number:
**PCT/JP2021/047507**

(87) International publication number:
**WO 2022/138702 (30.06.2022 Gazette 2022/26)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **25.12.2020 JP 2020216332**

(71) Applicant: **Tosoh Corporation**
**Yamaguchi 746-8501 (JP)**

(72) Inventors:
• **SUZUKI, Naoto**
  **Shunan-shi Yamaguchi 746-8501 (JP)**
• **TANIGUCHI, Jun**
  **Shunan-shi Yamaguchi 746-8501 (JP)**

(74) Representative: **TBK**
**Bavariaring 4-6**
**80336 München (DE)**

(54) **SPINEL-TYPE LITHIUM MANGANESE, METHOD FOR PRODUCING SAME, AND USE OF SAME**

(57)    Provided are a spinel-type lithium manganese oxide excellent in terms of charge-discharge performance at high temperatures and a lithium secondary battery excellent in terms of charge-discharge performance at high temperatures. A spinel-type lithium manganese oxide comprising a phosphate, the spinel-type lithium manganese oxide being represented by chemical formula: $Li_{1+X}Mn_{2-X-Y}M_YO_4$ (where $0.02 \leq X \leq 0.20$, $0.05 \leq Y \leq 0.30$, and M represents Al or Mg), wherein the phosphate has an average particle size of 0.1 $\mu m$ or more and 2.0 $\mu m$ or less, and primary particles of the spinel-type lithium manganese oxide have an average size of 1.5 $\mu m$ or more and 5.0 $\mu m$ or less, a method for producing the spinel-type lithium manganese oxide, and applications of the spinel-type lithium manganese oxide.

FIG. 1

**Description**

Technical Field

The present invention relates to a spinel-type lithium manganese oxide, a method for producing the spinel-type lithium manganese oxide and applications of the spinel-type lithium manganese oxide and specifically to a spinel-type lithium manganese oxide that includes a phosphate, a method for producing such a spinel-type lithium manganese oxide and a lithium secondary battery that includes an electrode including the spinel-type lithium manganese oxide.

Background Art

Lithium secondary batteries have been widely used as rechargeable batteries for mobile terminals since they have higher energy densities than other rechargeable batteries. There have been studies for further performance enhancement, such as application to large batteries required to have a large capacity and a high power, such as stationary or vehicle-mounted batteries.

Cobalt-based materials ($LiCoO_2$) have been primarily used as positive electrode materials for lithium secondary batteries that are consumer small batteries included in mobile phones or the like, and nickel-based materials ($LiNi_{0.8}Co_{0.15}Al_{0.05}O_2$) or nickel-cobalt-manganese ternary materials (e.g., $LiNi_{0.5}Co_{0.2}Mn_{0.3}O_2$) have been primarily used as positive electrode materials for lithium secondary batteries that are stationary or vehicle-mounted batteries. However, cobalt raw materials and nickel raw materials are expensive since they are not abundant resources. Furthermore, it is not possible to achieve high high-rate performance.

A spinel-type lithium manganese oxide, which is one of the types of manganese-based material, is one of the materials suitable for applications that require large batteries, since the raw material thereof, that is, manganese, is an abundant resource, inexpensive and excellent in terms of safety.

However, a spinel-type lithium manganese oxide is disadvantageous in terms of stability at high temperatures, that is, charge-discharge performance at high temperatures, which are particularly charge-discharge performance using carbon as negative electrode and storage performance. Solutions for the above issues have been anticipated. For example, in PTLs 1 and 2, where a spinel-type lithium manganese oxide that includes a phosphate is proposed, there is room for improvement in terms of charge-discharge performance at high temperatures, which are particularly charge-discharge performance using carbon as negative electrode.

Citation List

Patent Literature

PTL 1: Japanese Patent No. 5556983
PTL 2: Japanese Unexamined Patent Application Publication No. 2017-31006

Summary of Invention

Technical Problem

An object of the present invention is to provide a spinel-type lithium manganese oxide excellent in terms of charge-discharge performance at high temperatures and, in particular, charge-discharge performance using carbon as negative electrode and a lithium secondary battery that includes a positive electrode including the spinel-type lithium manganese oxide.

Solution to Problem

The inventors of the present invention conducted extensive studies of the spinel-type lithium manganese oxide and consequently found that the present invention, the summary of which is as describe below, may achieve the above-described object.

Specifically, the present invention includes [1] to [14] below.

[1] A spinel-type lithium manganese oxide comprising a phosphate, the spinel-type lithium manganese oxide being represented by chemical formula: $Li_{1+X}Mn_{2-X-Y}M_YO_4$ (where $0.02 \leq X \leq 0.20$, $0.05 \leq Y \leq 0.30$, and M represents Al or Mg), wherein the phosphate has an average particle size of 0.1 μm or more and 2.0 μm or less, and primary particles of the spinel-type lithium manganese oxide have an average size of 1.5 μm or more and 5.0 μm or less.

[2] The spinel-type lithium manganese oxide according to [1], having a phosphorus/manganese molar ratio of 0.0015 or more and 0.1 or less.

[3] The spinel-type lithium manganese oxide according to [1] or [2], having a BET specific surface area of 0.2 $m^2$/g or more and 1.0 $m^2$/g or less.

[4] The spinel-type lithium manganese oxide according to any one of [1] to [3], wherein secondary particles of the spinel-type lithium manganese oxide have an average size of 4.0 μm or more and 20.0 μm or less.

[5] The spinel-type lithium manganese oxide according to any one of [1] to [4], wherein a half-width of a (400)-plane, the half-width being measured by XRD, is 0.005 or more and 0.1 or less.

[6] The spinel-type lithium manganese oxide according to any one of [1] to [5], wherein a content of $SO_4$ is 0.8 wt% or less.

[7] The spinel-type lithium manganese oxide according to any one of [1] to [6], wherein a content of Na is 3,000 wtppm or less.

[8] The spinel-type lithium manganese oxide according to any one of [1] to [8], wherein a content of boron is 200 wtppm or less.

[9] The spinel-type lithium manganese oxide according to any one of [1] to [8], wherein, when a lithium secondary battery is prepared using the spinel-type lithium manganese oxide, an amount of manganese precipitated on a negative electrode after the lithium secondary battery has been subjected to 50 cycles of charge and discharge at 45°C is 0.15 wt% or less of an amount of manganese included in a positive electrode.

[10] A method for producing the spinel-type lithium manganese oxide according to any one of [1] to [9], the method comprising mixing a phosphate-manganese composite, a lithium compound and a compound including the element M according to [1] with one another, calcining the resulting mixture at a temperature of 720°C or more and 960°C or less in air or an oxygen-rich atmosphere (including a pure oxygen atmosphere), and subsequently performing disintegration.

[11] A method for producing the spinel-type lithium manganese oxide according to any one of [1] to [9], the method comprising mixing a phosphate-boron-manganese composite, a lithium compound and a compound including the element M according to [1] with one another, calcining the resulting mixture at a temperature of 720°C or more and 960°C or less in air or an oxygen-rich atmosphere (including a pure oxygen atmosphere), and subsequently performing disintegration.

[12] The method for producing the spinel-type lithium manganese oxide according to [11], wherein, subsequent to the calcining, performing water-washing to reduce a content of boron to 200 wtppm or less.

[13] An electrode comprising the spinel-type lithium manganese oxide according to any one of [1] to [9].

[14] A lithium secondary battery comprising the electrode according to [13], the electrode serving as a positive electrode.

Advantageous Effects of Invention

When the spinel-type lithium manganese oxide according to the present invention is used as a positive electrode material for lithium secondary batteries, it becomes possible to provide a lithium secondary battery excellent in terms of charge-discharge performance at high temperatures and, in particular, charge-discharge performance using carbon as negative electrode, compared with the related art.

Brief Description of Drawings

[Fig. 1] A scanning electron microscope (SEM) image of the surfaces of particles of a phosphate-containing spinel-type lithium manganese oxide prepared in Example 1.
[Fig. 2] SEM-EDX images of cross sections of particles of the phosphate-containing spinel-type lithium manganese oxide prepared in Example 1.

Description of Embodiments

Details of the present invention are described below.
The spinel-type lithium manganese oxide according to the present invention includes a phosphate. Examples of the phosphate include, but are not limited to, lithium phosphates, such as $Li_3PO_4$ and LiPOs; sodium phosphates,

such as $Na_3PO_4$, $NaH_2PO_4$ and $Na_2HPO_4$; and potassium phosphates, such as $K_3PO_4$, $KH_2PO_4$ and $K_2HPO_4$. The phosphate is preferably $Li_3PO_4$ or LiPOs and is more preferably $Li_3PO_4$. Since the phosphate is included in the spinel-type lithium manganese oxide, excellent charge-discharge performance can be achieved particularly at high temperatures when the spinel-type lithium manganese oxide is used as a positive electrode active material for lithium secondary batteries. The properties of the phosphate is not limited. Examples of the phosphate include, but are not limited to, a crystalline phosphate, a crystalline porous phosphate, a crystalline dense phosphate, an amorphous phosphate, an amorphous porous phosphate and an amorphous dense phosphate.

The spinel-type lithium manganese oxide according to the present invention is represented by chemical formula $Li_{1+X}Mn_{2-X-Y}M_YO_4$ (where $0.02 \leq X \leq 0.20$, $0.05 \leq Y \leq 0.30$, and M represents Al or Mg). If the value X is less than 0.02, the capacity is likely to reduce when charge and discharge are performed at high temperatures. If the value X exceeds 0.20, a sufficiently high charge-discharge capacity cannot be achieved. If the value Y is less than 0.05, the capacity is likely to reduce when charge and discharge are performed at high temperatures. If the value Y exceeds 0.30, a sufficiently high charge-discharge capacity cannot be achieved. The values X and Y of the spinel-type lithium manganese oxide can be determined by composition analysis. Examples of the method for composition analysis include inductively coupled plasma atomic emission spectroscopy and atomic absorption spectrometry.

The phosphate included in the spinel-type lithium manganese oxide according to the present invention has an average particle size of 0.1 μm or more and 2.0 μm or less. When the spinel-type lithium manganese oxide according to the present invention is used as a positive electrode active material of a lithium secondary battery, a reaction in which hydrogen fluoride included in the electrolyte solution of the lithium secondary battery in a trace amount is captured by the phosphate occurs quickly and, as a result, elution of manganese which occurs due to a reaction between the hydrogen fluoride and the spinel-type lithium manganese oxide can be reduced. Thus, excellent charge-discharge cycle performance can be achieved at high temperatures. If the average particle size of the phosphate is less than 0.1 pm, the phosphate is likely to disappear and lose its effectiveness when being reacted with the hydrogen fluoride. If the average particle size of the phosphate is more than 2.0 μm, the number of phosphate particles included in a positive electrode becomes small and it becomes difficult to capture the hydrogen fluoride. The average particle size of the phosphate is preferably 0.1 μm or more and 1.0 μm or less. The average particle size of the phosphate can be determined on the basis of a scanning electron microscope (SEM)-EDX image.

The average size of primary particles of the spinel-type lithium manganese oxide according to the present invention is 1.5 μm or more and 5.0 μm or less. If the average size of the primary particles is less than 1.5 μm, the surface area of the spinel-type lithium manganese oxide becomes large and, as a result, the amount of manganese eluted is increased. This increases the likelihood of degradation of durability. If the average size of primary particles of the spinel-type lithium manganese oxide is more than 5.0 pm, the particles may crack when a positive electrode is prepared and pressed and, accordingly, durability is likely to become degraded. The average size of primary particles of the spinel-type lithium manganese oxide is preferably 2.0 μm or more and 5.0 μm or less and is more preferably 3.0 μm or more and 5.0 μm or less.

In the spinel-type lithium manganese oxide according to the present invention, the phosphorus/manganese molar ratio is preferably 0.0015 or more and 0.1 or less and is more preferably 0.002 or more and 0.05 or less in order to further increase the rate at which, when the spinel-type lithium manganese oxide is used as a positive electrode active material of a lithium secondary battery, the reaction in which hydrogen fluoride included in the electrolyte solution of the lithium secondary battery in a trace amount is captured by the phosphate occurs, consequently further reduce the elution of manganese which occurs due to a reaction between the hydrogen fluoride and the spinel-type lithium manganese oxide, and achieve further excellent charge-discharge cycle performance at high temperatures.

The BET specific surface area of the spinel-type lithium manganese oxide according to the present invention is preferably 0.2 m²/g or more and 1.0 m²/g or less, is more preferably 0.2 m²/g or more and 0.8 m²/g or less and is further preferably 0.3 m²/g or more and 0.6 m²/g or less in order to achieve further excellent charge-discharge cycle performance at high temperatures when the spinel-type lithium manganese oxide is used as a positive electrode active material of a lithium secondary battery.

The average size of secondary particles of the spinel-type lithium manganese oxide according to the present invention is preferably 4 μm or more and 20 μm or less and is more preferably 5 μm or more and 10 μm or less in order to further reduce the lithium diffusion length inside the particles of the spinel-type lithium manganese oxide, thereby make it possible to achieve further excellent high-rate performance, and further enhance the packing density of the positive electrode mixture when the spinel-type lithium manganese oxide is used as a positive electrode active material of a lithium secondary battery.

The half-width of the (400)-plane of the spinel-type lithium manganese oxide according to the present invention which is measured by XRD is preferably 0.005 or more and 0.1 or less and is more preferably 0.01 or more and 0.05 or less in order to further enhance the crystallinity and, when the spinel-type lithium manganese oxide is used as a positive electrode active material of a lithium secondary battery, further reduce the elution of manganese and a change in crystal structure which occurs during charge and discharge and achieve further excellent charge-discharge cycle performance at high temperatures. The measurement of half-width was conducted in accordance with <Measurement of Half-Width by XRD> in Examples. Specifically, in order to compensate for errors resulting from the use of the measuring equipment, a reference material was subjected to the measurement and, subsequently, the half-width of the reference material was subtracted from the half-width of the spinel-type lithium manganese oxide.

The content of $SO_4$ in the spinel-type lithium manganese oxide according to the present invention is preferably 0.8 wt% or less and is more preferably 0.5 wt% or less in order to further increase the charge-discharge capacity of a lithium secondary battery that includes the spinel-type lithium manganese oxide according to the present invention as a positive electrode active material and achieve further excellent charge-discharge performance at high temperatures.

The content of Na in the spinel-type lithium manganese oxide according to the present invention is preferably 3,000 wtppm or less, is more preferably 1,500 ppm or less and is further preferably 1,000 wtppm or less in order to further increase the charge-discharge capacity of a lithium secondary battery that includes the spinel-type lithium manganese oxide according to the present invention as a positive electrode active material, enhance crystallinity, and achieve further excellent charge-discharge performance at high temperatures.

The content of boron in the spinel-type lithium manganese oxide according to the present invention is preferably 200 wtppm or less and is more preferably 100 wtppm or less in order to further increase the charge-discharge capacity of a lithium secondary battery that includes the spinel-type lithium manganese oxide according to the present invention as a positive electrode active material.

When a lithium secondary battery is prepared using the spinel-type lithium manganese oxide according to the present invention, the amount of manganese precipitated on the negative electrode after the lithium secondary battery has been subjected to 50 cycles of charge and discharge at 45°C is preferably 0.15 wt% or less and is more preferably 0.10 wt% or less of the amount of manganese included in the positive electrode in order to further enhance the performance of a lithium secondary battery that includes the spinel-type lithium manganese oxide according to the present invention as a positive electrode active material.

A method for producing the spinel-type lithium manganese oxide according to the present invention is descried below.

The spinel-type lithium manganese oxide according to the present invention can be produced by mixing a phosphate-manganese or phosphate-boron-manganese composite, a lithium compound and a compound including the element M according to Claim 1 with one another, calcining the resulting mixture at a temperature of 720°C or more and 960°C or less in air or an oxygen-rich atmosphere (including a pure oxygen atmosphere), and subsequently performing disintegration.

Examples of the phosphoric acid compound include, but are not limited to, lithium phosphates, such as $Li_3PO_4$ and $LiPOs$, sodium phosphates, such as $Na_3PO_4$, $NaH_2PO_4$ and $Na_2HPO_4$, potassium phosphates, such as $K_3PO_4$, $KH_2PO_4$ and $K_2HPO_4$, magnesium phosphates, such as $Mg_3(PO_4)_2$, $MgHPO_4$ and $Mg(H_2PO_4)_2$, and phosphoric acids of ammonium, such as $NH_4H_2PO_4$ and $(NH_4)_2HPO_4$.

Examples of the manganese compound include, but are not limited to, $MnO_2$, $Mn_3O_4$ and $Mn_2O_3$. In order to enhance the packing density of the spinel-type lithium manganese oxide, the manganese compound is preferably crystallized $Mn_3O_4$, electrolytic $MnO_2$, or $Mn_2O_3$ produced by calcining crystallized $Mn_3O_4$ or electrolytic $MnO_2$.

The boron compound is not limited. Examples of the boron compound include, but are not limited to, $H_3BO_3$, $B_2O_3$, $Li_2O \cdot nB_2O_3$ (n = 1 to 5).

The lithium compound is not limited. Examples of the lithium compound include, but are not limited to, lithium carbonate, lithium hydroxide, lithium nitrate, lithium chloride, lithium iodide and lithium oxalate.

The compound including the element M according to Claim 1 is a magnesium or aluminum compound.

The magnesium compound is not limited. Examples of the magnesium compound include, but are not limited to, magnesium hydroxide, magnesium oxide and magnesium carbonate.

The aluminum compound is not limited. Examples of the aluminum compound include, but are not limited to, aluminum hydroxide, aluminum oxyhydroxide and aluminum oxide.

When the composite is mixed with the other components in the production of the spinel-type lithium manganese oxide according to the present invention, the phosphate-manganese or phosphate-boron-manganese composite is prepared in advance and the phosphoric acid-manganese or phosphate-boron-manganese composite is subsequently mixed with the lithium compound and the compound including the element M according to Claim 1. The phosphate-manganese composite can be produced by dissolving the phosphoric acid compound in a solvent, such as water or ethanol, spraying the resulting solution to the manganese compound, and then performing drying. The phosphate-boron-manganese composite can be produced by dissolving the phosphoric acid compound and the boron compound in a solvent, such as water or ethanol, spraying the resulting solution to the manganese compound, and then performing drying. Preparing the phosphate-manganese or phosphate-boron-manganese composite in advance reduces the size of particles of the phosphate and boron compounds and thereby makes it easy to produce the effect of the phosphate to capture hydrogen fluoride and the effect of boron to increase the size of primary particles of the spinel-type lithium manganese oxide.

The calcining performed in the production of the spinel-type lithium manganese oxide according to the present invention is performed at a temperature of 720°C or more and 960°C or less in air or an oxygen-rich atmosphere (including a pure oxygen atmosphere), that is, an oxygen atmosphere having an oxygen content of 18 to 100 vol%. If the above calcining temperature is less than 720°C, the average size of primary particles of the spinel-type lithium manganese oxide is likely to be less than 1.5 $\mu$m. If the calcining temperature is higher than 960°C, the amount of oxygen deficiency in the spinel-type lithium manganese oxide is increased and, as a result, the charge-discharge cycle performance of a lithium secondary battery that includes the spinel-type lithium manganese oxide as a positive electrode active material is likely to become degraded. The calcining is preferably performed at a temperature of 800°C or more and 950°C or less. The amount of calcining time during which the calcining is performed in the production of the spinel-type lithium manganese oxide according to the present invention is preferably 3 hours or more and 12 hours or less in order to reduce the production costs.

In order to enhance charge-discharge cycle performance and reduce resistance, it is preferable to wash the spinel-type lithium manganese oxide according to the present invention with water to reduce the content of the boron compound. It is preferable to reduce the content of the boron compound to 100 wtppm or less by water-washing.

It is preferable to disintegrate the spinel-type lithium manganese oxide in order to further reduce the likelihood of the secondary particles consolidating with one another during calcining and makes it easy to achieve the intended particle size. Examples of the disintegration method include disintegration using a shearing force.

It is preferable to pass the disintegrated spinel-type lithium manganese oxide through a sieve in order to remove coarse particles larger than the thickness of the positive electrode. The size of openings of the sieve is preferably 100 $\mu$m or less and is more preferably 50 $\mu$m or less.

Using the spinel-type lithium manganese oxide including the phosphate according to the present invention as a material constituting a positive electrode for lithium secondary batteries enables the production of a lithium secondary battery having excellent charge-discharge cycle performance at high temperatures, which has been impossible in the related art.

The components of the lithium secondary battery which are other than the positive electrode are not limited. The negative electrode is composed of a material capable of occluding and releasing Li, such as a carbon-based material, a tin oxide-based material, $Li_4Ti_5O_{12}$, SiO, or a material capable of alloying with Li. Examples of the material capable of alloying with Li include a silicon-based material and an aluminum-based material. Examples of the electrolyte include an organic electrolyte solution that includes an organic solvent and a Li salt and appropriate additives that are dissolved in the organic solvent, a solid electrolyte conductive to Li ions, and a combination thereof.

EXAMPLES

The present invention is described with reference to specific examples below. It should be noted that the present invention is not limited to the examples below.

<Composition Analysis and Measurement of $SO_4$, Na, Boron and $PO_4$ (Comparative Example 2) Contents>

The composition of each of the spinel-type lithium manganese oxides prepared in Examples and Comparative Examples and the contents of $SO_4$, Na, boron and $PO_4$ (Comparative Example 2) in the spinel-type lithium manganese oxide were determined by dissolving the spinel-type lithium manganese oxide in an aqueous hydrochloric acid-hydrogen peroxide mixture solution and analyzing the solution using an inductively coupled plasma atomic emission spectrometer (product name: ICP-AES, produced by PerkinElmer Japan Co., Ltd.).

<Measurement of Average Size of Phosphate Particles>

The average particle size of the phosphate was determined on the basis of a SEM-EDS image taken using a field-emission scanning electron microscope (product name: FE-SEM JSM-7600F, produced by JEOL Ltd.) and an energy dispersive X-ray analyzer (NSS312E + UltraDry 30mm$^2$, produced by Thermo Fisher Scientific K.K.).

<Measurement of Average Size of Primary Particles of Lithium Manganese Oxide>

The average size of primary particles of the lithium manganese oxide was determined by measuring the sizes of 100 particles on a SEM image of the surfaces of the lithium manganese oxide particles which was taken using a scanning electron microscope (product name: JSM-IT500, produced by JEOL Ltd.).

<Measurement of BET Specific Surface Area>

Into a glass cell for measurement of BET specific surface area, 1.0 g of the sample was charged. Then, the sample was subjected to a dehydration treatment at 150°C for 30 minutes in a nitrogen flow in order to remove the moisture adhered to the powder particles.

The BET specific surface area of the treated sample was measured by a single-point method with a BET measurement apparatus (product name: MICROMERITICS DeSorbIII, produced by Shimadzu Corporation) using a nitrogen 30%-helium 70% mixed gas as an adsorption gas.

<Measurement of Secondary Particle Size and Relative Standard Deviation of Secondary Particle Size >

The average size ($D_{50}$) of secondary particles of the lithium manganese oxide and the standard deviation of the particle size were determined using a particle size distribution analyzer (product name: MT3000II series, produced by MicrotracBEL).

The relative standard deviation of the secondary particle size was determined from the average size of the secondary particles and the above standard deviation using the formula below.

```
Relative Standard Deviation (%) = (Standard Deviation
of Particle Size)/(Average Particle Size) × 100
```

<Charge-Discharge Cycle Test Using Carbon as Negative Electrode>

The positive electrode was prepared by mixing 1.0 g of one of the spinel-type lithium manganese oxides prepared in Examples and Comparative Examples, 0.032 g of acetylene black (product name: DENKA BLACK, produced by Denka Company Limited), 0.306 mL of a 10-wt% polyvinylidene fluoride/N-methyl-2-pyrrolidone solution (polyvinylidene fluoride: 0.032 g) (spinel-type lithium manganese oxide:acetylene black:polyvinylidene fluoride = 94:3:3 by weight), and 0.751 mL of N-methyl-2-pyrrolidone with one another using a planetary centrifugal mixer (product name: AR-100, produced by THINKY CORPORATION) to prepare a positive electrode material slurry, applying the positive electrode material slurry to an aluminum foil, drying the resulting coating film at 150°C for 30 minutes, subsequently punching the foil to a diameter of 15.958 mm, then performing uniaxial pressing at 3 ton/cm², and performing drying at 150°C for 2 hours under reduced pressure. The amount of the slurry deposited was adjusted such that the amount of the spinel-type lithium manganese oxide deposited was 5 mg/cm².

The negative electrode was prepared by mixing spherical natural graphite and 2.104 mL of a 10-wt% polyvinylidene fluoride/N-methyl-2-pyrrolidone solution (polyvinylidene fluoride: 0.221 g) (graphite:polyvinylidene fluoride = 90:10 by weight) with each other using a planetary centrifugal mixer (product name: AR-100, produced by THINKY CORPORATION) to prepare a negative electrode material slurry, applying the negative electrode material slurry to a copper foil, drying the resulting coating film at 150°C for 30 minutes, subsequently punching the foil to a diameter of 16.156 mm, then performing uniaxial pressing at 3 ton/cm², and performing drying at 150°C for 2 hours under reduced pressure. The amount of the slurry deposited was adjusted such that the amount of the spherical natural graphite deposited was 1.8 mg/cm².

A CR2032-type coin cell was prepared using the positive electrode, the negative electrode, an electrolyte solution including a mixed solvent containing ethylene carbonate and dimethyl carbonate (1:2 by volume) and 1 mol/dm³ of LiPF$_6$ dissolved in the mixed solvent, and a separator (product name: Celgard, produced by Polypore International, Inc.).

The above battery was subjected to one cycle of constant-current constant-voltage charge and constant-current discharge within the cell voltage range of 4.25 to 3.0 V at a current of 0.1 mA and 24°C. The charge capacity was considered as initial capacity. The battery was subsequently subjected to one cycle of constant-current constant-voltage charge and constant-current discharge within the cell voltage range of 4.25 to 3.0 V at a current of 0.2 mA and 24°C. The discharge capacity was considered as battery capacity. The battery was then subjected to 50 cycles of constant-current constant-voltage charge and constant-current discharge at 45°C within the cell voltage range of 4.25 to 3.0 V at a current density corresponding to one-hour discharge rate relative to the battery capacity. A charge-discharge cycle retention using carbon as negative electrode was determined from the ratio between the discharge capacities measured in the 50th and 1st cycles. Note that the constant-voltage charge was terminated when the charge current was attenuated to 1/10 of the current applied during the constant-current charge.

<Measurement of Amount of Manganese Precipitated on Negative Electrode>

Subsequent to the charge-discharge cycle test using carbon as negative electrode, the CR2032-type coin cell was decomposed and the carbon negative electrode was collected. The carbon negative electrode was washed with 10 mL of dimethyl carbonate and subsequently immersed in 10 mL of aqueous 5-wt% sulfuric acid-3-wt% hydrogen peroxide mixture solution. Then, the carbon negative electrode was irradiated with ultrasonic waves for 5 minutes in order to dissolve manganese precipitated thereon. The content of manganese in the resulting solution was quantified by ICP. The amount of manganese precipitated on the negative electrode was calculated using the following formula.

$$\text{Amount of manganese precipitated on negative electrode}$$
$$\text{(wt\%)} = \text{(Content of manganese in solution)}/\text{(Content of}$$
$$\text{manganese in positive electrode)} \times 100$$

EXAMPLE 1

Pure water having a temperature of 60°C was stirred while air was blown into the pure water. While the oxidation reduction potential of the pure water was adjusted to 100 mV with reference to the hydrogen electrode in a consistent manner, a 2-mol/L aqueous manganese sulfate solution and a 20-wt% aqueous sodium hydroxide solution were continuously added to the pure water. The resulting slurry was filtered, cleaned, and then dried to form $Mn_3O_4$ having an average particle size of 3.8 $\mu$m.

An aqueous solution prepared by dissolving 0.15 g of $Mg(H_2PO_4)_2 \cdot 4H_2O$ (produced by Wako Pure Chemical Industries, Ltd.) and 0.23 g of $H_3BO_3$ (produced by Wako Pure Chemical Industries, Ltd.) in 5 g of pure water was sprayed to 20 g of the $Mn_3O_4$ prepared above. Subsequently, drying was performed at 60°C for 6 hours. Hereby, a phosphate-boron-manganese composite was prepared. Then, 5.00 g of the phosphate-boron-manganese composite was mixed with 1.36 g of lithium carbonate having an average particle size of 3 $\mu$m and 0.11 g of $Mg(OH)_2$ (produced by Wako Pure Chemical Industries, Ltd.; average particle size: 0.07 $\mu$m) by dry process. The resulting mixture was calcined at 800°C for 6 hours in a box furnace in which air was circulated at a rate of 5 L/min and subsequently cooled to room temperature. The heating rate was set to 100 °C/hr. The cooling rate was set to 20 °C/hr in the range of 800°C to 600°C and 100 °C/hr in the range of 600°C to room temperature. Pure water was added to the calcined material, which was stirred for 1 hour, then filtered, and subsequently dried at 150°C. The resulting phosphate-containing spinel-type lithium manganese oxide was disintegrated with a high-power compact crusher (product name: Force Mill, produced by Osaka Chemical Co., Ltd.) and subsequently passed through a sieve having an opening of 32 $\mu$m. Hereby, phosphate-containing spinel-type lithium manganese oxide was prepared.

The composition of the phosphate-containing spinel-type lithium manganese oxide was $Li_{1.07}Mn_{1.87}Mg_{0.06}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the results of measurement of the phosphorus/manganese molar ratio, the average particle size of phosphate, the average size of primary particles of lithium manganese oxide, the BET specific surface area, the average size of secondary particles of lithium manganese oxide, the half-width of the (400)-plane measured by XRD, and the contents of $SO_4$, Na and B (hereinafter, referred to as "measurement results"). Table 2 lists the battery performance.

[Table 1]

| | PHOSPHORUS/ MANGANESE MOLAR RATIO | $PO_4$ (wt%) | AVERAGE PARTICLE SIZE OF PHOSPHATE ($\mu$m) | AVERAGE SIZE OF PRIMARY PARTICLES OF LITHIUM MANGANESE OXIDE ($\mu$m) | BET SPECIFIC SURFACE AREA ($m^2$/g) | AVERAGE SIZE OF SECONDARY PARTICLES OF LITHIUM MANGANESE OXIDE ($\mu$m) | HALF-WIDTH OF XRD (400)-PLANE (°) | $SO_4$ (wt%) | Na (wtppm) | B (wtppm) |
|---|---|---|---|---|---|---|---|---|---|---|
| EXAMPLE 1 | 0.0043 | 0.42 | 0.4 | 4.3 | 0.58 | 7.0 | 0.050 | 0.43 | 150 | 100 |
| EXAMPLE 2 | 0.0042 | 0.41 | 0.5 | 4.2 | 0.55 | 8.4 | 0.038 | 0.43 | 120 | 80 |
| EXAMPLE 3 | 0.0042 | 0.41 | 0.5 | 3.6 | 0.65 | 5.9 | 0.040 | 0.44 | 130 | 80 |
| EXAMPLE 4 | 0.0081 | 0.80 | 0.4 | 3.8 | 0.62 | 6.6 | 0.048 | 0.42 | 180 | 90 |
| EXAMPLE 5 | 0.0043 | 0.42 | 0.4 | 4.8 | 0.42 | 8.8 | 0.031 | 0.44 | 190 | 140 |
| EXAMPLE 6 | 0.0043 | 0.42 | 0.4 | 4.9 | 0.37 | 13.4 | 0.029 | 0.45 | 180 | 130 |
| EXAMPLE 7 | 0.0041 | 0.40 | 0.5 | 1.6 | 0.71 | 5.9 | 0.041 | 0.76 | 310 | <10 |
| EXAMPLE 8 | 0.0058 | 0.57 | 0.4 | 1.7 | 0.74 | 6.6 | 0.049 | 0.60 | 200 | <10 |
| EXAMPLE 9 | 0.0079 | 0.78 | 0.5 | 1.6 | 0.53 | 13.1 | 0.060 | 0.45 | 210 | 50 |
| EXAMPLE 10 | 0.0081 | 0.80 | 0.5 | 2.3 | 0.45 | 13.2 | 0.059 | 0.51 | 200 | 60 |
| EXAMPLE 11 | 0.0073 | 0.72 | 0.5 | 1.5 | 0.58 | 13.1 | 0.054 | 0.27 | 230 | 80 |
| COMPARATIVE EXAMPLE 1 | 0.0000 | 0.00 | - | 1.5 | 0.77 | 5.6 | 0.037 | 0.75 | 230 | <10 |
| COMPARATIVE EXAMPLE 2 | 0.0076 | 0.75 | 3.0 | 0.4 | 0.99 | 14.2 | 0.122 | 1.31 | 480 | 200 |
| COMPARATIVE EXAMPLE 3 | 0.0043 | 0.42 | 0.5 | 0.7 | 2.53 | 10.3 | 0.078 | 1.10 | 380 | <10 |
| COMPARATIVE EXAMPLE 4 | 0.0040 | 0.39 | 0.5 | 4.0 | 0.37 | 11.2 | 0.042 | 0.71 | 330 | <10 |
| COMPARATIVE EXAMPLE 5 | 0.0079 | 0.78 | 3.1 | 0.9 | 0.54 | 14.8 | 0.057 | 1.00 | 400 | <10 |
| COMPARATIVE EXAMPLE 6 | 0.0075 | 0.74 | 0.4 | 0.2 | 5.91 | 5.7 | 0.239 | 0.42 | 100 | 70 |

(continued)

| | PHOSPHORUS/ MANGANESE MOLAR RATIO | $PO_4$ (wt%) | AVERAGE PARTICLE SIZE OF PHOSPHATE (μm) | AVERAGE SIZE OF PRIMARY PARTICLES OF LITHIUM MANGANESE OXIDE (μm) | BET SPECIFIC SURFACE AREA (m²/g) | AVERAGE SIZE OF SECONDARY PARTICLES OF LITHIUM MANGANESE OXIDE (μm) | HALF-WIDTH OF XRD (400)-PLANE (°) | $SO_4$ (wt%) | Na (wtppm) | B (wtppm) |
|---|---|---|---|---|---|---|---|---|---|---|
| COMPARATIVE EXAMPLE 7 | 0.0076 | 0.75 | 0.6 | 5.5 | 0.49 | 12.9 | 0.061 | 0.45 | 200 | 150 |

[Table 2]

| | BATTERY PERFORMANCE | | |
|---|---|---|---|
| | INITIAL CAPACITY (mAh/g) | CYCLE PERFORMANCE USING CARBON AS NEGATIVE ELECTRODE (%) | AMOUNT OF MANGANESE PRECIPITATED ON CARBON NEGATIVE ELECTRODE (wt%) |
| EXAMPLE 1 | 101 | 87.3 | 0.15 |
| EXAMPLE 2 | 100 | 86.9 | 0.15 |
| EXAMPLE 3 | 100 | 87.2 | 0.14 |
| EXAMPLE 4 | 102 | 88.3 | 0.13 |
| EXAMPLE 5 | 101 | 86.1 | 0.16 |
| EXAMPLE 6 | 99 | 86.5 | 0.16 |
| EXAMPLE 7 | 101 | 85.4 | 0.17 |
| EXAMPLE 8 | 99 | 85.6 | 0.18 |
| EXAMPLE 9 | 96 | 86.6 | 0.15 |
| EXAMPLE 10 | 97 | 86.0 | 0.14 |
| EXAMPLE 11 | 100 | 87.5 | 0.12 |
| COMPARATIVE EXAMPLE 1 | 100 | 81.8 | 0.28 |
| COMPARATIVE EXAMPLE 2 | 104 | 84.6 | 0.16 |
| COMPARATIVE EXAMPLE 3 | 98 | 81.0 | 0.23 |
| COMPARATIVE EXAMPLE 4 | 98 | 78.2 | 0.20 |
| COMPARATIVE EXAMPLE 5 | 101 | 82.2 | 0.12 |
| COMPARATIVE EXAMPLE 6 | 83 | 40.5 | 0.20 |
| COMPARATIVE EXAMPLE 7 | 90 | 81.1 | 0.13 |

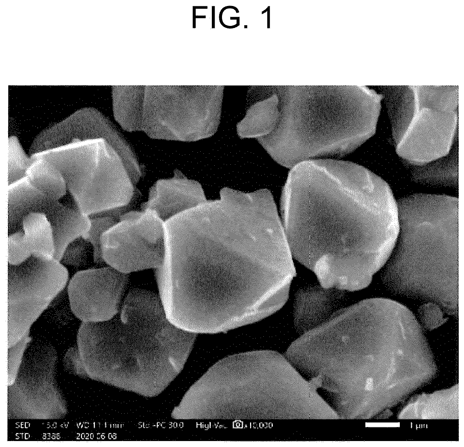

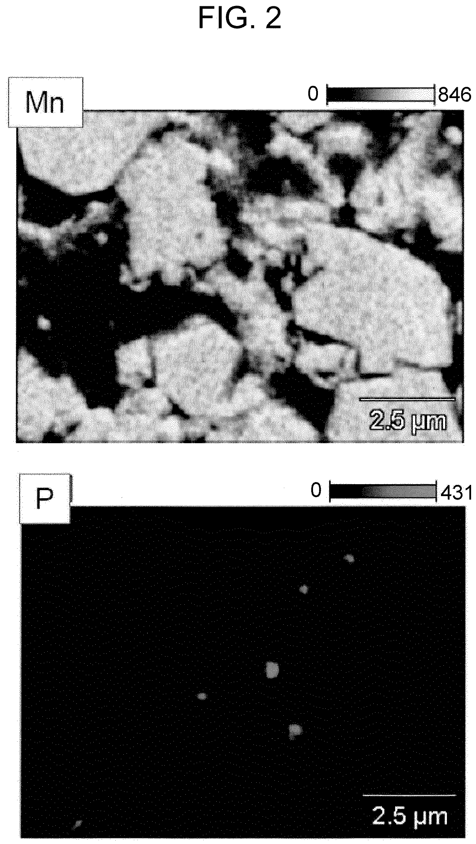

Fig. 1 is an SEM image of the surfaces of particles. Fig. 2 includes SEM-EDX images of cross sections of the particles.

EXAMPLE 2

A phosphate-containing spinel-type lithium manganese oxide was prepared as in Example 1, except that the amount of the $H_3BO_3$ used in the preparation of the phosphate-boron-manganese composite was changed to 0.15 g and the calcining temperature was changed to 850°C.

The composition of the phosphate-containing spinel-type lithium manganese oxide was $Li_{1.07}Mn_{1.87}Mg_{0.06}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

EXAMPLE 3

A phosphate-containing spinel-type lithium manganese oxide was prepared as in Example 2, except that the calcining temperature was changed to 800°C.

The composition of the phosphate-containing spinel-type lithium manganese oxide was $Li_{1.07}Mn_{1.87}Mg_{0.06}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

EXAMPLE 4

A phosphate-containing spinel-type lithium manganese oxide was prepared as in Example 3, except that the amount of the $Mg(H_2PO_4)_2 \cdot 4H_2O$ used in the preparation of the phosphate-boron-manganese composite was changed to 0.30 g.

The composition of the phosphate-containing spinel-type lithium manganese oxide was $Li_{1.07}Mn_{1.87}Mg_{0.06}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

EXAMPLE 5

A phosphate-containing spinel-type lithium manganese oxide was prepared as in Example 1, except that the amount of the $H_3BO_3$ used in the preparation of the phosphate-boron-manganese composite was changed to 0.38 g.

The composition of the phosphate-containing spinel-type lithium manganese oxide was $Li_{1.07}Mn_{1.87}Mg_{0.06}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

EXAMPLE 6

A phosphate-containing spinel-type lithium manganese oxide was prepared as in Example 2, except that the amount of the $H_3BO_3$ used in the preparation of the phosphate-boron-manganese composite was changed to 0.38 g.

The composition of the phosphate-containing spinel-type lithium manganese oxide was $Li_{1.07}Mn_{1.87}Mg_{0.06}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

EXAMPLE 7

A phosphate-containing spinel-type lithium manganese oxide was prepared as in Example 1, except that the addition of $H_3BO_3$ was omitted in order to prepare a phosphate-manganese composite and the calcining temperature was changed to 900°C.

The composition of the phosphate-containing spinel-type lithium manganese oxide was $Li_{1.07}Mn_{1.87}Mg_{0.06}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

EXAMPLE 8

A phosphate-containing spinel-type lithium manganese oxide was prepared as in Example 1, except that the amount of the $H_3BO_3$ used was changed to 0.025 g, the amount of the lithium carbonate used was changed to 1.35 g, 0.27 g of $Al(OH)_3$ was used instead of $Mg(OH)_2$, and the calcining temperature was changed to 850°C.

The composition of the phosphate-containing spinel-type lithium manganese oxide was $Li_{1.04}Mn_{1.86}Al_{0.10}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

EXAMPLE 9

An aqueous solution prepared by dissolving 0.30 g of $Mg(H_2PO_4)_2 \cdot 4H_2O$ (produced by Wako Pure Chemical Industries, Ltd.) and 0.08 g of $H_3BO_3$ (produced by Wako Pure Chemical Industries, Ltd.) in 5 g of pure water was sprayed to 20 g of electrolytic manganese dioxide having an average particle size of 3 $\mu$m. Subsequently, drying was performed at 60°C for 6 hours. Hereby, a phosphate-boron-manganese composite was prepared. Then, 5.00 g of the phosphate-boron-manganese composite was mixed with 1.12 g of lithium carbonate having an average particle size of 3 $\mu$m and 0.28 g of $Mg(OH)_2$ (produced by Wako Pure Chemical Industries, Ltd.; average particle size: 0.07 $\mu$m) by dry process. The resulting mixture was calcined at 850°C for 6 hours in a box furnace in which air was circulated at a rate of 5 L/min and subsequently cooled to room temperature. The heating rate was set to 100 °C/hr. The cooling rate was set to 20 °C/hr in the range of 850°C to 600°C and 100 °C/hr in the range of 600°C to room temperature. Pure water was added to the calcined material, which was stirred for 1 hour, then filtered, and subsequently dried at 150°C. The resulting phosphate-containing spinel-type lithium manganese oxide was disintegrated with a high-power compact crusher (product name: Force Mill, produced by Osaka Chemical Co., Ltd.) and subsequently passed through a sieve having an opening of 32 $\mu$m. Hereby, phosphate-containing spinel-type lithium manganese oxide was prepared.

The composition of the phosphate-containing spinel-type lithium manganese oxide was $Li_{1.02}Mn_{1.81}Mg_{0.17}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

EXAMPLE 10

A phosphate-containing spinel-type lithium manganese oxide was prepared as in Example 9, except that the calcining temperature was changed to 900°C.

The composition of the phosphate-containing spinel-type lithium manganese oxide was $Li_{1.02}Mn_{1.81}Mg_{0.17}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

EXAMPLE 11

A phosphate-containing spinel-type lithium manganese oxide was prepared as in Example 10, except that the amount of the lithium carbonate used was changed to 1.22 g and 0.62 g of $Al(OH)_3$ was used instead of $Mg(OH)_2$.

The composition of the phosphate-containing spinel-type lithium manganese oxide was $Li_{1.04}Mn_{1.71}Al_{0.25}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

COMPARATIVE EXAMPLE 1

A spinel-type lithium manganese oxide was prepared as in Example 1, except that $Mg(H_2PO_4)_2 \cdot 4H_2O$ and $H_3BO_3$ were not used. The composition of the spinel-type lithium manganese oxide was $Li_{1.07}Mn_{1.87}Mg_{0.06}O_4$. The results of the XRD measurement confirmed that the spinel-type lithium manganese oxide had a single phase of JCPDS No. 35-782 ($LiMn_2O_4$). Table 1 lists the measurement results. Table 2 lists the battery performance.

COMPARATIVE EXAMPLE 2

With 100.0 g of electrolytic manganese dioxide having an average particle size of 12 pm, 23.7 g of lithium carbonate having an average particle size of 3 pm, 4.3 g of aluminum hydroxide having an average particle size of 3 pm, 0.9 g of trilithium phosphate (produced by Wako Pure Chemical Industries, Ltd.), and 0.11 g of a 1.8-wt% aqueous solution prepared by dissolving 1.8 g of $H_3BO_3$ (produced by Wako Pure Chemical Industries, Ltd.) in 98.2 g of pure water were mixed. The resulting mixture was calcined at 800°C for 20 hours in a box furnace in which air was circulated at a rate of 5 L/min and subsequently cooled to room temperature. The heating rate and the cooling rate were both set to 100 °C/hr. The calcined material was disintegrated with a high-power compact crusher (product name: Rotary Crusher, produced by Osaka Chemical Co., Ltd.) and subsequently passed through a sieve having an opening of 32 $\mu$m. Hereby, phosphate-containing spinel-type lithium manganese oxide was prepared.

The composition of the phosphate-containing spinel-type lithium manganese oxide was $Li_{1.08}Mn_{1.83}Al_{0.09}O_4$ ($PO_4$ content: 0.75 wt%). The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

COMPARATIVE EXAMPLE 3

With 100.0 g of electrolytic manganese dioxide having an average particle size of 10 pm, 23.5 g of lithium carbonate having an average particle size of 3 pm, 1.9 g of magnesium hydroxide (produced by Wako Pure Chemical Industries, Ltd.) having an average particle size of 0.07 pm, and 0.5 g of trilithium phosphate (produced by Wako Pure Chemical Industries, Ltd.) were mixed. The resulting mixture was calcined at 700°C for 6 hours in a box furnace in which air was circulated at a rate of 5 L/min and subsequently cooled to room temperature. The heating rate and the cooling rate were both set to 100 °C/hr. The calcined material was disintegrated with a high-power compact crusher (product name: Rotary Crusher, produced by Osaka Chemical Co., Ltd.) and subsequently passed through a sieve having an opening of 32 $\mu$m. Hereby, phosphate-containing spinel-type lithium manganese oxide was prepared.
The composition of the phosphate-containing spinel-type lithium manganese oxide was $Li_{1.07}Mn_{1.87}Mg_{0.06}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

COMPARATIVE EXAMPLE 4

A spinel-type lithium manganese oxide was prepared as in Example 7, except that the calcining temperature was changed to 1000°C. The composition of the spinel-type lithium manganese oxide was $Li_{1.07}Mn_{1.87}Mg_{0.06}O_4$. The results of the XRD measurement confirmed that the spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

COMPARATIVE EXAMPLE 5

A spinel-type lithium manganese oxide was prepared as in Comparative Example 2, except that $H_3BO_3$ was not used and the calcining temperature was set to 1,000°C.
The composition of the phosphate-containing spinel-type lithium manganese oxide was $Li_{1.08}Mn_{1.83}Al_{0.09}O_4$ ($PO_4$ content: 0.74 wt%). The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

COMPARATIVE EXAMPLE 6

A spinel-type lithium manganese oxide was prepared as in Example 11, except that the calcining temperature was set to 700°C.
The composition of the phosphate-containing spinel-type lithium manganese oxide was $Li_{1.04}Mn_{1.71}Al_{0.25}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

COMPARATIVE EXAMPLE 7

A spinel-type lithium manganese oxide was prepared as in Example 11, except that the calcining temperature was set to 1,000°C.
The composition of the phosphate-containing spinel-type lithium manganese oxide was $Li_{1.04}Mn_{1.71}Al_{0.25}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.
The entire contents of the specification, claims, drawings, and abstract of Japanese Patent Application No. 2020-216332 filed on December 25, 2020, are cited and incorporated herein as the disclosure of the specification of the present invention.

Industrial Applicability

Since the phosphate-containing spinel-type lithium manganese oxide according to the present invention includes a phosphate having a specific particle size and has a specific primary particle size, the phosphate-containing spinel-type lithium manganese oxide can be used as a positive electrode active material for lithium secondary batteries having excellent charge-discharge performance and, in particular, excellent charge-discharge performance using carbon as negative electrode at high temperatures.

**Claims**

1.  A spinel-type lithium manganese oxide comprising a phosphate, the spinel-type lithium manganese oxide being represented by chemical formula: $Li_{1+X}Mn_{2-X-Y}M_YO_4$ (where $0.02 \leq X \leq 0.20$, $0.05 \leq Y \leq 0.30$, and M represents Al or Mg), wherein the phosphate has an average particle size of 0.1 $\mu$m or more and 2.0 $\mu$m or less, and primary particles of the spinel-type lithium manganese oxide have an average size of 1.5 $\mu$m or more and 5.0 $\mu$m or less.

2.  The spinel-type lithium manganese oxide according to Claim 1, having a phosphorus/manganese molar ratio of 0.0015 or more and 0.1 or less.

3.  The spinel-type lithium manganese oxide according to Claim 1 or 2, having a BET specific surface area of 0.2 $m^2$/g or more and 1.0 $m^2$/g or less.

4.  The spinel-type lithium manganese oxide according to any one of Claims 1 to 3, wherein secondary particles of the spinel-type lithium manganese oxide have an average size of 4.0 $\mu$m or more and 20.0 $\mu$m or less.

5.  The spinel-type lithium manganese oxide according to any one of Claims 1 to 4, wherein a half-width of a (400)-plane, the half-width being measured by XRD, is 0.005 or more and 0.1 or less.

6.  The spinel-type lithium manganese oxide according to any one of Claims 1 to 5, wherein a content of $SO_4$ is 0.8 wt% or less.

7.  The spinel-type lithium manganese oxide according to any one of Claims 1 to 6, wherein a content of Na is 3,000 wtppm or less.

8.  The spinel-type lithium manganese oxide according to any one of Claims 1 to 7, wherein a content of boron is 200 wtppm or less.

9.  The spinel-type lithium manganese oxide according to any one of Claims 1 to 8, wherein, when a lithium secondary battery is prepared using the spinel-type lithium manganese oxide, an amount of manganese precipitated on a negative electrode after the lithium secondary battery has been subjected to 50 cycles of charge and discharge at 45°C is 0.15 wt% or less of an amount of manganese included in a positive electrode.

10. A method for producing the spinel-type lithium manganese oxide according to any one of Claims 1 to 9, the method comprising mixing a phosphate-manganese composite, a lithium compound and a compound including the element M according to Claim 1 with one another, calcining the resulting mixture at a temperature of 720°C or more and 960°C or less in air or an oxygen-rich atmosphere (including a pure oxygen atmosphere), and subsequently performing disintegration.

11. A method for producing the spinel-type lithium manganese oxide according to any one of Claims 1 to 9, the method comprising mixing a phosphate-boron-manganese composite, a lithium compound and a compound including the element M according to Claim 1 with one another, calcining the resulting mixture at a temperature of 720°C or more and 960°C or less in air or an oxygen-rich atmosphere (including a pure oxygen atmosphere), and subsequently performing disintegration.

12. The method for producing the spinel-type lithium manganese oxide according to Claim 11, wherein, subsequent to the calcining, performing water-washing to reduce a content of boron to 200 wtppm or less.

13. An electrode comprising the spinel-type lithium manganese oxide according to any one of Claims 1 to 9.

14. A lithium secondary battery comprising the electrode according to Claim 13, the electrode serving as a positive electrode.

FIG. 1

# FIG. 2

<table>
<tr><td colspan="2" align="center"><b>INTERNATIONAL SEARCH REPORT</b></td><td colspan="2">International application No.<br><br><b>PCT/JP2021/047507</b></td></tr>
</table>

**A. CLASSIFICATION OF SUBJECT MATTER**

*C01G 45/00*(2006.01)i; *C01B 25/30*(2006.01)i; *H01M 4/36*(2006.01)i; *H01M 4/505*(2010.01)i
FI: C01G45/00; C01B25/30 Z; H01M4/505; H01M4/36 A

According to International Patent Classification (IPC) or to both national classification and IPC

**B. FIELDS SEARCHED**

Minimum documentation searched (classification system followed by classification symbols)

C01G45/00; C01B25/30; H01M4/36; H01M4/505

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2010-123466 A (HITACHI LTD) 03 June 2010 (2010-06-03)<br>    entire text | 1-14 |
| A | JP 5556983 B2 (TODA KOGYO CORP) 23 July 2014 (2014-07-23)<br>    entire text | 1-14 |
| A | JP 2017-31006 A (SHIN NIPPON DENKO KK) 09 February 2017 (2017-02-09)<br>    entire text | 1-14 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br><br>**24 February 2022** | Date of mailing of the international search report<br><br>**08 March 2022** |
|---|---|
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br><br>Telephone No. |

Form PCT/ISA/210 (second sheet) (January 2015)

**INTERNATIONAL SEARCH REPORT**
Information on patent family members

| International application No. |
| --- |
| **PCT/JP2021/047507** |

| Patent document cited in search report | | | Publication date (day/month/year) | Patent family member(s) | | | Publication date (day/month/year) |
| --- | --- | --- | --- | --- | --- | --- | --- |
| JP | 2010-123466 | A | 03 June 2010 | US 2010/0129714 A1<br>entire text<br>EP 2192639 A1 | | | |
| JP | 5556983 | B2 | 23 July 2014 | US 2010/0327221 A1<br>entire text<br>WO 2009/084214 A1<br>EP 2226293 A1<br>CA 2710539 A1<br>KR 10-2010-0106987 A<br>CN 101910066 A | | | |
| JP | 2017-31006 | A | 09 February 2017 | (Family: none) | | | |

Form PCT/ISA/210 (patent family annex) (January 2015)

**EP 4 269 359 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5556983 B
- JP 2017031006 A
- JP 2020216332 A